# DEMANDE DE BREVET EUROPEEN

(11) **EP 0 532 384 A1**
(43) Date de publication de la demande: **17.03.1993**
(21) Numéro de dépôt: 92402388.0
(22) Date de dépôt: 02.09.1992
(51) Int. Cl.: B60S 1/04, B60S 1/58

(54) **Dispositif pour la fixation d'un mécanisme d'entraînement d'essuie-glace**

(30) Priorité: 03.09.1991 FR 9110856
(71) Demandeur: VALEO SYSTEMES D'ESSUYAGE, 78180 Montigny-Le-Bretonneux (FR)
(72) Inventeur: Juran, François, F-92140 Clamart (FR)
(74) Mandataire: Gamonal, Didier

(57) **Abrégé**

L'invention concerne un dispositif pour la fixation d'un mécanisme d'entraînement d'essuie-glace, ce mécanisme comportant un axe de sortie (24) propre à traverser une ouverture (28) ménagée dans une glace (14) et à recevoir un bras d'essuie-glace (26) pour l'essuyage d'une surface (18) de la glace.

Le dispositif comprend une plaque-support (30) propre à être fixée à la glace (14), à l'opposé de la surface à essuyer, par des moyens adhésifs (32) et à être fixée au mécanisme d'entraînement (12) par des moyens de liaison (34).

L'invention est applicable notamment à un essuie-glace équipant la glace arrière d'un véhicule automobile.

## Description

L'invention concerne un dispositif pour la fixation d'un mécanisme d'entraînement d'essuie-glace pour véhicules automobiles.

On connaît déjà des essuie-glaces dont le mécanisme d'entraînement comporte un axe de sortie propre à traverser une ouverture ménagée dans une glace et à recevoir un bras d'essuie-glace pour l'essuyage d'une surface de la glace.

De tels essuie-glaces sont utilisés généralement pour l'essuyage de la glace arrière d'un véhicule automobile, qui est le plus souvent portée par un hayon. Toutefois, il est envisageable d'utiliser également un essuie-glace de ce type pour l'essuyage du pare-brise d'un véhicule automobile, comme décrit dans le document FR-A-2 514 714 qui concerne un essuie-glace équipant le pare-brise d'un véhicule à deux roues.

Le mécanisme d'entraînement, qui peut être un moteur ou un réducteur, est alors fixé à un élément de la carrosserie du véhicule, par exemple au bâti du hayon, ce qui nécessite de prévoir des aménagements spécifiques sur cette carrosserie.

Or, il arrive fréquemment que, sur un véhicule d'un type donné, l'essuie-glace, associé à la glace arrière, puisse être prévu en série ou bien en option.

Ainsi, dans le cas où le véhicule n'est pas équipé d'un tel essuie-glace arrière, les aménagements prévus sur la carrosserie pour la fixation éventuelle d'un mécanisme d'entraînement d'essuie-glace ne jouent aucun rôle.

L'invention a notamment pour but de remédier aux inconvénients précités.

Elle propose, en conséquence, un dispositif pour la fixation d'un mécanisme d'entraînement d'essuie-glace, ce mécanisme comportant un axe de sortie propre à traverser une ouverture ménagée dans une glace et à recevoir un bras d'essuie-glace pour l'essuyage d'une surface de la glace.

Conformément à l'invention, le dispositif comprend une plaque- support propre à être fixée à la glace, à l'opposé de la surface à essuyer, par des moyens adhésifs et à être fixée au mécanisme d'entraînement par des moyens de liaison.

En conséquence, il n'est pas nécessaire de prévoir des aménagements spécifiques sur la carrosserie pour recevoir le mécanisme d'entraînement, puisque celui-ci est porté par la plaque-support qui est fixée à la glace.

Selon une autre caractéristique de l'invention, la plaque-support comprend une face interne surfacée possédant une courbure correspondant à celle de la glace en vue de sa fixation sur cette dernière et une face externe conformée pour recevoir le mécanisme d'entraînement.

Cette plaque-support peut être une tôle métallique ou encore une plaque moulée à partir d'une matière plastique de résistance mécanique élevée.

Les moyens adhésifs utilisés pour fixer la plaque-support sur la glace sont, de préférence, constitués par une colle compatible avec la glace et la plaque-support.

On peut notamment utiliser une colle du type époxy comportant deux composants, à savoir une résine et un durcisseur, à mélanger avant utilisation.

Comme autres moyens adhésifs, on peut faire appel, par exemple, à une bande adhésive double face, dont l'une des faces est collée sur la plaque-support et l'autre face collée sur la glace.

Les moyens de liaison utilisés pour la fixation du mécanisme d'entraînement à la plaque-support sont, de préférence, des moyens mécaniques.

Par exemple, il peut s'agir d'au moins un goujon fixé à la plaque-support, par exemple par soudure ou sertissage, et propre à recevoir un écrou de serrage. On peut aussi envisager d'utiliser au moins un écrou fixé à la plaque-support, par exemple par soudure ou sertissage, et propre à recevoir une vis de serrage.

Toutefois, il peut être fait appel à d'autres types de moyens de liaison, par exemple des moyens de clipsage.

De préférence, la plaque-support est conformée pour recevoir directement un moteur d'entraînement de l'essuie-glace.

Dans certains cas, il peut être envisagé de fixer directement un réducteur sur la plaque-support et de disposer le moteur d'entraînement à un autre endroit, par exemple sur la carrosserie.

Dans la description qui suit, faite seulement à titre d'exemple, on se réfère au dessin annexé, sur lequel :
- la figure 1 est une vue partiellement en coupe d'un dispositif selon l'invention utilisé pour la fixation d'un mécanisme d'entraînement d'essuie-glace sur une glace de véhicule automobile ;
- la figure 2 est une vue en coupe de la plaque-support du dispositif de la figure 1 ; et
- la figure 3 est une vue en coupe de cette plaque-support dans une variante de réalisation.

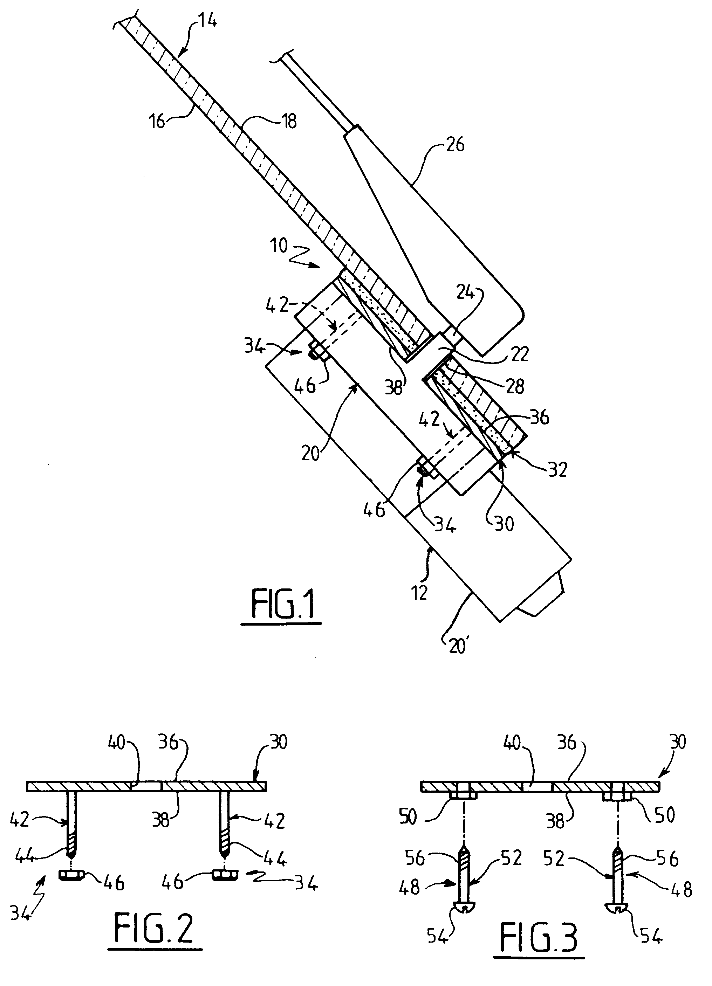

On se réfère tout d'abord à la figure 1 qui montre un dispositif 10 selon l'invention utilisé pour la fixation d'un mécanisme d'entraînement d'essuie-glace 12 sur une glace 14, par exemple la glace arrière d'un véhicule automobile.

La glace 14 comporte une surface interne 16 disposée du côté de l'habitacle du véhicule et une surface externe 18 disposée du côté extérieur.

Le mécanisme d'entraînement 12 comprend un boîtier 20 muni d'un tube cylindrique 22 traversé par un axe de sortie 24 entraîné en rotation, d'une manière alternée et sur une course angulaire limitée, par un mécanisme approprié (non représenté) logé dans le boîtier 20.

Dans l'exemple, le mécanisme d'entraînement 12 est un réducteur destiné à être relié à un moteur électrique 20′ situé proche du réducteur et fixé en un endroit approprié au boîtier 20.

En variante, on peut faire appel à un mécanisme d'entraînement constitué d'un moteur dont le rotor est relié directement à l'axe de sortie 24.

Sur l'axe de sortie 24 du mécanisme d'entraînement 12, est fixé un bras d'essuie-glace 26, ou porte-balai, destiné à supporter un balai d'essuie-glace (non représenté) propre à essuyer la surface externe 18 de la glace 14.

Le tube cylindrique 22 du boîtier du mécanisme d'entraînement 12 passe au travers d'une ouverture cylindrique 28 ménagée dans l'épaisseur de la glace 14.

Le dispositif de fixation 10 comprend une plaque-support 30 propre à être fixée, d'une part, contre la surface interne 16 de la glace 14 par des moyens adhésifs 32 et, d'autre part, au mécanisme d'entraînement 12 par des moyens de liaison 34.

La plaque-support 30 (figures 1 et 2) comprend une face interne surfacée 36 ayant une courbure correspondante à celle de la surface interne 16 de la glace 14 dans la région entourant le trou 28, de manière à épouser parfaitement la forme de la glace.

De cette manière, la plaque-support 30 peut être fixée à la surface interne 16 de la glace 14 par une mince couche de moyens adhésifs 32.

Ces derniers sont avantageusement constitués par une couche de colle propre à assurer un assemblage résistant entre le matériau constitutif de la plaque-support 30 et le verre de la glace 14.

La plaque-support 30 est avantageusement obtenue à partir d'une plaque de tôle métallique ou encore d'une plaque obtenue par moulage d'une matière plastique résistante, éventuellement renforcée par une armature.

Les moyens adhésifs 32 sont avantageusement constitués par une colle du type époxy comportant deux composants, à savoir une résine et un durcisseur, destinés à être mélangés avant utilisation.

Au lieu de faire appel à une colle, il peut être envisagé de faire appel à une bande adhésive double face dont l'une des faces est destinée à être collée contre la face interne 36 de la plaque-support 30 et dont l'autre face est destinée à être collée contre la surface interne 16 de la glace 14.

Du côté opposé à la face interne 36, la plaque-support 30 comporte une face externe 38 conformée pour recevoir le mécanisme d'entraînement 12.

La plaque-support 30 comporte en outre une ouverture cylindrique 40, ménagée sur toute son épaisseur, et destinée à livrer passage au tube cylindrique 22.

Dans la forme de réalisation des figures 1 et 2, les moyens de liaison 34 comprennent au moins deux goujons 42 dont chacun est fixé à la plaque-support par tout moyen approprié, par exemple par soudage ou sertissage dans le cas où cette plaque est formée d'une tôle métallique. Chacun des goujons 42 fait saillie perpendiculairement à la face 38 de la plaque-support 30, de manière à pouvoir traverser des ouvertures appropriées, ménagées au travers du boîtier 20. Chacun des goujons 42 se termine par une partie filetée 44 propre à recevoir un écrou de serrage 46.

Dans la forme de réalisation de la figure 3, les moyens de liaison 48 comprennent au moins deux écrous 50 fixés, par exemple par soudage ou sertissage, contre la face 38 de la plaque-support 30, dans le cas où cette dernière est formée d'une tôle métallique.

Chacun des écrous 50 est destiné à recevoir un goujon 52 possédant une tête d'entraînement 54 et une tige comportant un filetage 56 propre à coopérer avec l'écrou.

Là encore, chacun des goujons 52 est destiné à passer au travers d'un passage approprié ménagé dans l'épaisseur du boîtier 20 du mécanisme d'entraînement 12.

Bien entendu, la fixation du mécanisme d'entraînement à la plaque-support 30 peut s'effectuer par d'autres types de moyens de liaison, de préférence par des moyens mécaniques, en particulier par clipsage.

De plus, les moyens de liaison 34 ou 48 ont été décrits jusqu'à maintenant pour la fixation du mécanisme d'entraînement par l'intermédiaire du boîtier 20 seul, mais il peut être envisagé que ces moyens de liaison soient employés conjointement avec le moteur électrique 20′ ou que lesdits moyens de liaison soient utilisés uniquement en relation avec le moteur seul.

La glace 14 est, de préférence, destinée à constituer la glace arrière d'un véhicule automobile, cette glace arrière étant dans la plupart des cas montée sur un hayon.

Dans le cas où le véhicule est fabriqué dans une version ne comportant pas d'essuie-glace sur la glace arrière, il est envisageable soit d'obturer l'ouverture 28 de la glace 14 par un bouchon approprié, soit encore de remplacer la glace 14 par une autre glace, de forme identique, mais ne comportant pas d'ouverture.

Bien entendu, le dispositif de l'invention peut être aussi utilisé pour la fixation d'un mécanisme d'entraînement d'essuie- glace destiné à équiper le pare-brise d'un véhicule automobile, tel qu'un véhicule de tourisme, un poids lourd, ou encore un véhicule motorisé à deux roues, du type motocyclette.

Il est à noter que le dispositif de fixation de l'invention et le mécanisme d'entraînement qu'il supporte peuvent être facilement masqués par une bande de couleur noire, analogue à celles qui sont présentes très souvent en bordure des glaces de véhicule automobile.

## Revendications

**1. -** Dispositif pour la fixation d'un mécanisme d'entraînement d'essuie-glace, ce mécanisme comportant un axe de sortie (24) propre à traverser une ouverture (28) ménagée dans une glace (14) et à recevoir un bras d'essuie-glace (26) pour l'essuyage d'une surface (18) de la glace (14), caractérisé en ce qu'il comprend une plaque-support (30) propre à être fixée à la glace (14), à l'opposé de la surface à essuyer, par des moyens adhésifs (32) et à être fixée au mécanisme d'entraînement (12) par des moyens de liaison (34; 48).

**2. -** Dispositif selon la revendication 1, caractérisé en ce que la plaque-support (30) comprend une face interne surfacée (36) possédant une courbure correspondante à celle de la glace (14) en vue de sa fixation sur cette dernière et une face externe (38) conformée pour recevoir le mécanisme d'entraînement (12).

**3. -** Dispositif selon l'une des revendications 1 et 2, caractérisé en ce que la plaque-support (30) est une tôle métallique ou une plaque moulée en matière plastique.

**4. -** Dispositif selon l'une des revendications 1 à 3, caractérisé en ce que les moyens adhésifs (32) comprennent une colle compatible avec la glace (14) et la plaque-support (30).

**5. -** Dispositif selon la revendication 4,caractérisé en ce que la colle est une colle époxy à deux composants, à savoir une résine et un durcisseur.

**6. -** Dispositif selon l'une des revendications 1 à 5, caractérisé en ce que les moyens de liaison (34) comprennent au moins un goujon (42) fixé à la plaque-support (30) et propre à recevoir un écrou de serrage (46).

**7. -** Dispositif selon l'une des revendications 1 à 5, caractérisé en ce que les moyens de liaison (48) comprennent au moins un écrou (50) fixé à la plaque-support (30) et propre à recevoir une vis de serrage (52).

**8. -** Dispositif selon l'une des revendications 1 à 7, caractérisé en ce que la plaque-support (30) est conformée pour recevoir directement un réducteur (12) pour l'entraînement du bras d'essuie-glace (26).

**9. -** Dispositif selon l'une des revendications 1 à 7, caractérisé en ce que la plaque-support (30) est conformée pour recevoir directement un moteur pour l'entraînement du bras d'essuie- glace (26).

**10.-** Dispositif selon l'une des revendications 1 à 7, caractérisé en ce que la plaque de support (30) est conformée pour recevoir simultanément un moteur et un réducteur (12) pour l'entraînement du bras d'essuie-glace (26).
